Europäisches Patentamt

European Patent Office

Office européen des brevets

(11) Veröffentlichungsnummer: **0 090 139**
**B1**

(12) **EUROPÄISCHE PATENTSCHRIFT**

(45) Veröffentlichungstag der Patentschrift:
18.12.85

(21) Anmeldenummer: 83100745.5

(22) Anmeldetag: 27.01.83

(51) Int. Cl.⁴: **G 01 B 7/02**, G 01 B 7/30, G 01 D 3/02

(54) Digitales elektrisches Längen- oder Winkelmesssystem.

(30) Priorität: 25.03.82 DE 3210962

(43) Veröffentlichungstag der Anmeldung:
05.10.83 Patentblatt 83/40

(45) Bekanntmachung des Hinweises auf die Patenterteilung:
18.12.85 Patentblatt 85/51

(84) Benannte Vertragsstaaten:
AT CH FR GB IT LI NL SE

(56) Entgegenhaltungen:
DE - C - 853 657
DE - C - 2 724 858
DE - C - 2 820 753

(73) Patentinhaber: **Dr. Johannes Heidenhain GmbH,
Nansenstrasse 17, D-8225 Traunreut (DE)**

(72) Erfinder: **Nelle, Günther, Dr.-Ing., Eichenweg 12,
D-8221 Bergen (DE)**

## Beschreibung

Die Erfindung betrifft ein digitales elektrisches Längen- oder Winkelmesssystem mit einer Einrichtung zur Fehlerkorrektur gemäss dem Oberbegriff des Anspruchs 1.

Einrichtungen zur Fehlerkorrektur bei Positionsmesssystemen sind bereits bekannt.

In der DE-C Nr. 853657 ist eine optische Messeinrichtung beschrieben, bei der eine Platte im Strahlengang entsprechend dem Fehlerverlauf schwenkbar ist.

In der DE-C Nr. 2724858 ist bei einem Längenmesssystem eine Korrektureinrichtung mit einer Gliederkette beschrieben, deren Glieder gemäss dem Fehlerverlauf quer zur Messrichtung einstellbar sind und von einem Übertragungselement abgegriffen werden, das eine korrigierende Relativbewegung in Messrichtung zwischen einer parallel zur Teilungsebene eines Massstabs geführten Abtasteinheit und dem Massstab bewirkt.

Der DE-C Nr. 2820753 ist eine Einrichtung zur Fehlerkorrektur bei einem Längenmesssystem zu entnehmen, bei der ein Fehlerkorrekturprofil integrierender Bestandteil eines Trägers für einen Massstab ist und von einem Übertragungselement abgegriffen wird, das eine korrigierende Relativbewegung in Messrichtung zwischen einer parallel zur Teilungsebene eines Massstabs geführten Abtasteinheit und dem Massstab bewirkt.

Bei den vorgenannten Korrektureinrichtungen unterliegen die Übertragungselemente in Form schwenkbarer Winkelelemente einem mechanischen Verschleiss und bedingen wesentlich grössere Querschnittsabmessungen derartiger Positionsmesssysteme, was einem flexiblen Einsatz der Messsysteme abträglich sein kann.

Der Erfindung liegt die Aufgabe zugrunde, bei digitalen elektrischen Positionsmesssystemen eine Einrichtung zur Fehlerkorrektur anzugeben, bei der der Bedarf an mechanischen Elementen reduziert werden kann und die ohne weiteres in handelsübliche Positionsmesssysteme ohne wesentliche bauliche Veränderungen eingebaut werden kann.

Diese Aufgabe wird bei einer Einrichtung der genannten Art erfindungsgemäss durch die kennzeichnenden Merkmale des Anspruchs 1 gelöst.

Die mit der Erfindung erzielten Vorteile bestehen insbesondere darin, dass die vorgeschlagene Korrektureinrichtung keiner aufwendigen mechanischen Elemente bedarf, wodurch sich ein einfacher und kostengünstiger Aufbau eines Positionsmesssystems ergibt. Wegen des weitgehenden Fehlens verschleissbehafteter Teile und des geringen Raumbedarfs ist ein betriebssicherer und flexibler Einsatz gewährleistet. Diese Einrichtung erlaubt die Korrektur linearer und nichtlinearer Fehler unabhängig von der Messlänge.

Weitere vorteilhafte Ausbildungen der Erfindung entnimmt man den Unteransprüchen.

Ausführungsbeispiele der Erfindung werden in der Zeichnung näher erläutert. Es zeigen:

Fig. 1 zwei Ansichten eines Längenmesssystems mit einer Korrektureinrichtung,

Fig. 2 zwei Ansichten eines Längenmesssystems mit einer weiteren Korrektureinrichtung, und

Fig. 3 zwei Ansichten eines Längenmesssystems mit einer schwenkbaren Abtastplatte.

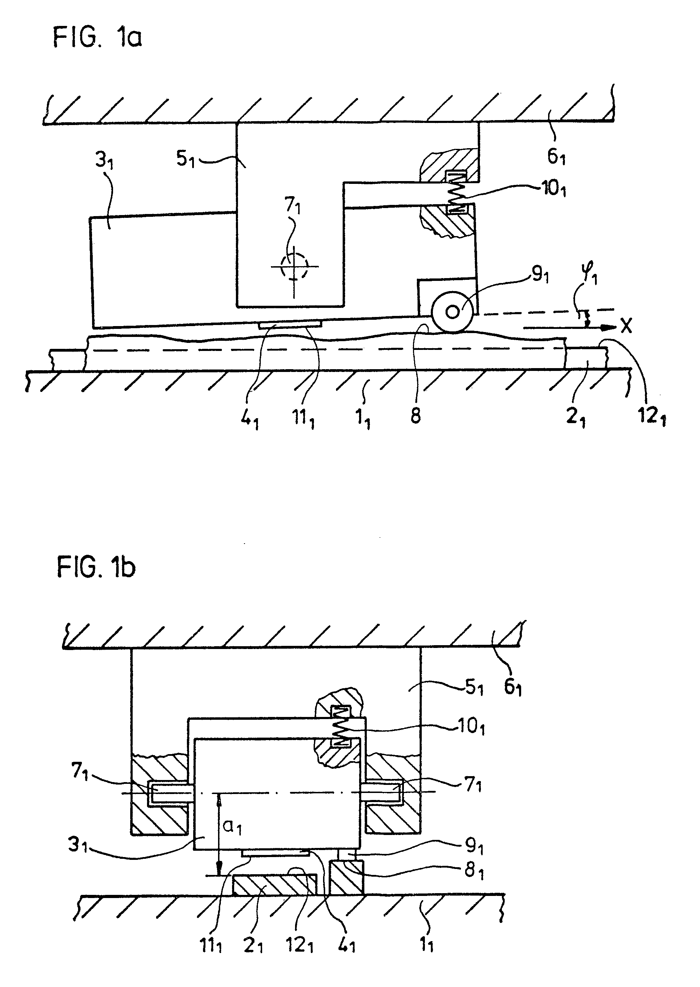

In Fig. 1a, b ist in zwei Ansichten ein Längenmesssystem dargestellt, bei dem an einem Bett $1_1$ einer nicht dargestellten Maschine ein Massstab $2_1$ beispielsweise durch Kleben befestigt ist, dessen Teilung von einer Abtasteinheit $3_1$ mittels einer Abtastplatte $4_1$ und in nicht gezeigter Weise mittels einer Beleuchtungseinrichtung und mittels Photoelemente abgetastet wird; die Abtasteinheit $3_1$ ist mit einem Mitnehmer $5_1$ verbunden, der starr an einem Schlitten $6_1$ der Maschine befestigt ist. Zur Korrektur von Fehlern, insbesondere von Teilungsfehlern und/oder Maschinenfehlern, bei der Messung der Relativlage zwischen dem Schlitten $6_1$ und dem Bett $1_1$ der Maschine ist die Abtasteinheit $3_1$ mittels einer Achse $7_1$ schwenkbar im Mitnehmer $5_1$ gelagert. Neben dem Massstab $2_1$ ist auf dem Bett $1_1$ ein Fehlerkorrekturprofil $8_1$ befestigt, das von einer in der Abtasteinheit $3_1$ gelagerten Rolle $9_1$ unter dem Druck einer Feder $10_1$ abgetastet wird, so dass beim Messvorgang die Abtasteinheit $3_1$ bzw. die Teilungsebene $11_1$ der Abtastplatte $4_1$ Drehungen um einen variablen Winkel $\varphi_1$ bezüglich der Teilungsebene $12_1$ des Massstabs $2_1$ erfahren. Da die Mittellinie der Achse $7_1$ von der Teilungsebene $12_1$ des Massstabs $2_1$ einen konstanten Abstand $\alpha_1$ aufweist, ergibt sich eine Messwertkorrektur vom Betrage $\alpha_1 \cdot \varphi_1$ gemäss dem Fehlerverlauf in der Messrichtung X. Die Achse $7_1$ verläuft in parallelem Abstand $\alpha_1$ von der zur Messrichtung X parallelen Teilungsebene $12_1$ des Massstabs $2_1$ senkrecht zur Messrichtung X.

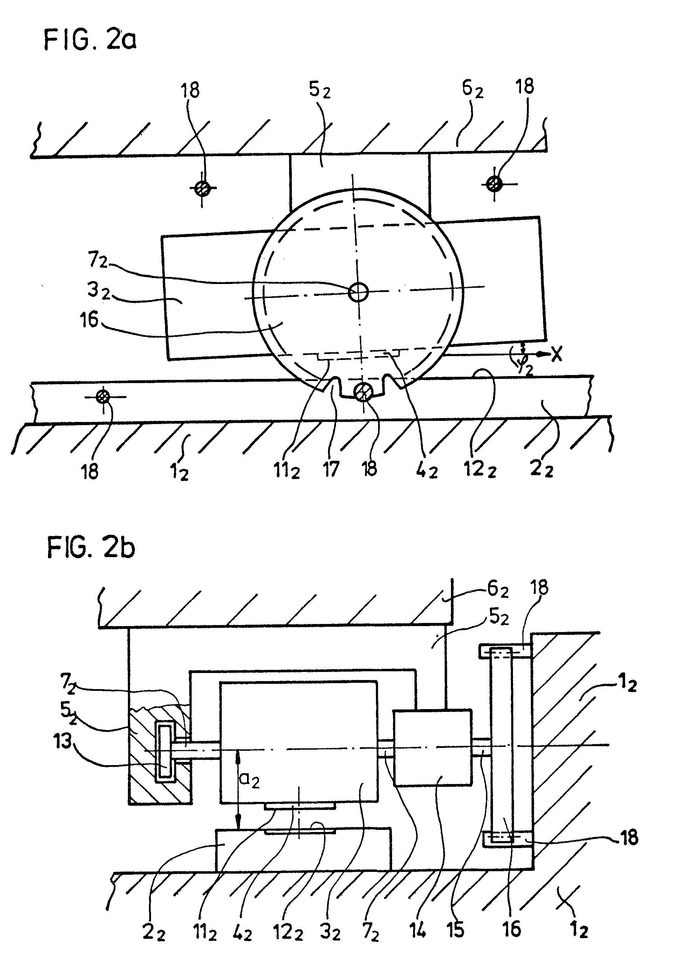

In Fig. 2a, b ist in zwei Ansichten ein weiteres Längenmesssystem dargestellt, bei dem an einem Bett $1_2$ einer nicht dargestellten Maschine ein Massstab $2_2$ beispielsweise durch Kleben befestigt ist, dessen Teilung von einer Abtasteinheit $3_2$ mittels einer Abtastplatte $4_2$ und in nicht gezeigter Weise mittels einer Beleuchtungseinrichtung und mittels Photoelemente abgetastet wird; die Abtasteinheit $3_2$ ist mit einem Mitnehmer $5_2$ verbunden, der starr an einem Schlitten $6_2$ der Maschine befestigt ist. Zur Korrektur von Fehlern bei der Messung der Relativlage zwischen dem Schlitten $6_2$ und dem Bett $1_2$ der Maschine ist die Abtasteinheit $3_2$ mittels einer Achse $7_2$ schwenkbar in einem Lager 13 des Mitnehmers $5_2$ gelagert und mit einem Untersetzungsgetriebe 14 verbunden, das am Mitnehmer $5_2$ befestigt ist. Das Untersetzungsgetriebe 14 ist über eine Welle 15 mit einem Stellrad 16 verbunden, das entlang seinem Umfang äquidistante Aussparungen 17 aufweist, in die bei der Bewegung der Abtasteinheit $3_2$ an diametral gegenüberliegenden Stellen Stellbolzen 18 am Bett $1_2$ je nach dem Fehlerverlauf eingreifen, um das Stellrad 16 jeweils um eine Aussparung 17 vorwärts oder rückwärts zu drehen, so dass die Abtasteinheit $3_2$ bzw. die Teilungsebene $11_2$ der Abtastplatte $4_2$ Drehungen um einen variablen Winkel $\varphi_2$ bezüglich der Teilungsebene $12_2$ des Massstabs $2_2$ erfahren. Da die Mittellinie der Achse $7_2$

von der Teilungsebene $12_2$ des Massstabs $2_2$ einen konstanten Abstand $a_2$ aufweist, ergibt sich eine Messwertkorrektur vom Betrage $a_2 \cdot \varphi_2$ gemäss dem Fehlerverlauf in der Messrichtung X. Die Achse $7_2$ verläuft in parallelem Abstand $a_2$ von der zur Messrichtung X parallelen Teilungsebene $12_2$ des Massstabs $2_2$ senkrecht zur Messrichtung X.

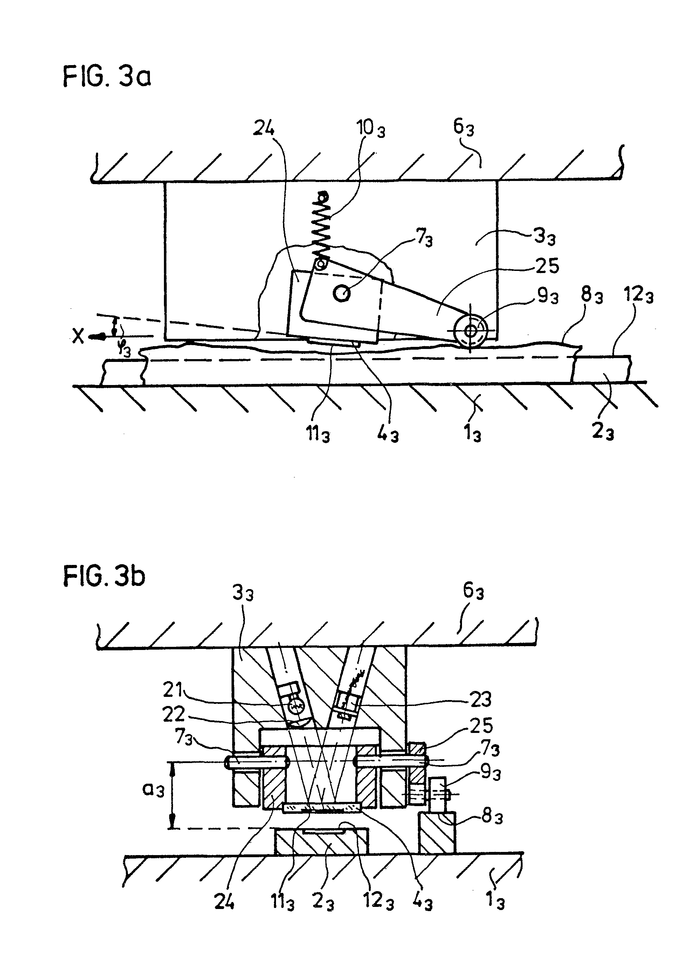

In Fig. 3a, b ist in zwei Ansichten ein Längenmesssystem dargestellt, bei dem an einem Bett $1_3$ einer nicht dargestellten Maschine ein Massstab $2_3$ beispielsweise durch Kleben befestigt ist, dessen Teilung von einer Abtasteinheit $3_3$ mittels einer Beleuchtungseinrichtung in Form einer Lampe 21 und eines Kondensors 22, einer Abtastplatte $4_3$ und mittels Photoelemente 23 abgetastet wird; die Abtasteinheit $3_3$ ist an einem Schlitten $6_3$ der Maschine starr befestigt. Während die Lampe 21, der Kondensor 22 und die Photoelemente 23 in der Abtasteinheit $3_3$ fest angeordnet sind, ist zur Fehlerkorrektur bei der Messung der Relativlage zwischen dem Schlitten $6_3$ und dem Bett $1_3$ der Maschine die Abtastplatte $4_3$ in einem Träger 24 mittels einer Achse $7_3$ schwenkbar in der Abtasteinheit $3_3$ gelagert. Neben dem Massstab $2_3$ ist auf dem Bett $1_3$ ein Fehlerkorrekturprofil $8_3$ befestigt, das von einer Rolle $9_3$ unter dem Druck einer Feder $10_3$ abgetastet wird; die Rolle $9_3$ ist an einem Ende eines Hebels 25 gelagert, der am anderen Ende starr mit der Welle $7_3$ verbunden ist. Beim Messvorgang erfährt somit die Teilungsebene $11_3$ der Abtastplatte $4_3$ gemäss dem Fehlerverlauf Drehungen um einen variablen Winkel $\varphi_3$ bezüglich der Teilungsebene $12_3$ des Massstabs $2_3$. Da die Mittellinie der Achse $7_3$ von der Teilungsebene $12_3$ des Massstabs $2_3$ einen konstanten Abstand $a_3$ aufweist, ergibt sich eine Messwertkorrektur vom Betrage $a_3 \cdot \varphi_3$ entsprechend dem Fehlerverlauf in der Messrichtung X. Die Achse $7_3$ verläuft in parallelem Abstand $a_3$ von der zur Messrichtung X parallelen Teilungsebene $12_3$ des Massstabs $2_3$ senkrecht zur Messrichtung X.

Die Schwenkachse 7 liegt vorzugsweise in der zur Abtastplatte 4 senkrechten Symmetrieebene senkrecht zur Messrichtung X.

In nicht dargestellter Weise kann die Schwenkachse der Abtasteinheit beispielsweise auch durch zwei Führungsrollen gebildet sein, um die Abtasteinheit auf Führungsflächen des Massstabs oder eines Gehäuses für den Massstab zu führen.

Die Erfindung ist nicht auf lichtelektrische Messsysteme beschränkt, sondern auch bei optischen, magnetischen, induktiven und kapazitiven Messsystemen einsetzbar.

## Patentansprüche

1. Digitales elektrisches Längen- oder Winkelmesssystem mit einer Einrichtung zur Korrektur von Fehlern, insbesondere von Teilungsfehlern und/oder Maschinenfehlern, mit einer eine Messteilung (2) aufweisenden Massverkörperung und einer diese Messteilung (2) abtastenden Abtasteinheit (3), wobei die Messteilung (2) und die Abtasteinheit (3) jeweils an einem von zwei relativ zueinander verschlieblichen Objekten (1, 6) vorgesehen sind und wobei die Abtasteinheit (3) über einen Mitnehmer (5) oder direkt mit einem dieser Objekte (1, 6) verbunden ist, deren gegenseitige Relativlage gemessen wird, dadurch gekennzeichnet, dass die Messteilung (2) und eine in der Abtasteinheit (3) angeordneten Abtastplatte (4) um eine Drehachse (7) quer zur Messrichtung (X) derart relativ zueinander schwenkbar sind, dass die Ebenen (12, 11) von Messteilung und Abtastplatte einen dem Fehlerverlauf in der Messrichtung (X) entsprechenden Winkel $\varphi$ in einer Ebene parallel zur Messrichtung (X) einschliessen.

2. Messsystem nach Anspruch 1, dadurch gekennzeichnet, dass zur Einstellung des Winkels $\varphi$ die Abtastplatte (4) um die Drehachse (7) schwenkbar ist, die parallel und im Abstand a von der Teilungsebene (12) der Messteilung (2) vorgesehen ist und senkrecht zur Messrichtung (X) verläuft.

3. Messsystem nach Anspruch 2, dadurch gekennzeichnet, dass der Messteilung (2) ein Fehlerkorrekturprofil (8) zugeordnet ist, das von einem Übertragungselement (9) zur Schwenkung der Abtastplatte (4) abgetastet wird.

4. Messsystem nach Anspruch 2, dadurch gekennzeichnet, dass der Messteilung (2) Stellbolzen (18) zugeordnet sind, die ein Stellrad (16) zur Schwenkung der Abtastplatte (4) beaufschlagen.

5. Messsystem nach Anspruch 2, dadurch gekennzeichnet, dass die Drehachse (7) in der zur Abtastplatte (4) senkrechten Symmetrieebene senkrecht zur Messrichtung (X) liegt.

6. Messsystem nach Anspruch 3, dadurch gekennzeichnet, dass das Übertragungselement (9) durch eine Rolle gebildet ist.

7. Messsystem nach Anspruch 4, dadurch gekennzeichnet, dass das Stellrad (16) mit der Drehachse (7) der Abtastplatte (4) verbunden ist und an seinem Umfang Aussparungen (17) aufweist, in die die Stellbolzen (18) eingreifen.

## Claims

1. Digital electrical length or angle measuring system comprising a device for correcting errors, particularly division errors and/or machine errors, comprising an embodiment of the measure, provided with a measuring division (2), and a sampling unit (3) which samples this measuring division (2), in which arrangement the measuring division (2) and the sampling unit (3) are provided in each case at one of two objects (1, 6) which can be displaced relative to each other and in which arrangement the sampling unit (3) is connected via a carrier (5) or directly to one of these objects (1, 6), the mutual relative position of which is being measured, characterised in that the measuring division (2) and a sampling plate (4), which is arranged in the sampling unit (3), can be rotated around an axis of rotation (7) transversely to the direction of measuring (X) relative to each other in such a manner that the planes (12, 11) of measuring division and sampling plate enclose an angle φ which corresponds to the course of the error in the direction of measuring (X) in a plane parallel to the direction of measuring (X).

2. Measuring system according to Claim 1, characterised in that, for adjusting the angle φ, the sampling plate (4) can be rotated around the axis of rotation (7) which is provided parallel to and at a distance a from the plane of division (12) of the measuring division (2) and extends perpendicularly to the direction of measuring (X).

3. Measuring system according to Claim 2, characterised in that the measuring division (2) is associated with an error correction contour (8) which is sampled by a transmission element (9) for rotating the sampling plate (4).

4. Measuring system according to Claim 2, characterised in that the measuring division (2) is associated with adjusting bolts (18) which are applied to an adjusting wheel (16) for rotating the sampling plate (4).

5. Measuring system according to Claim 2, characterised in that the axis of rotation (7) is located in the plane of symmetry, which is perpendicular to the sampling plate (4), perpendicular to the direction of measuring (X).

6. Measuring system according to Claim 3, characterised in that the transmission element (9) is formed by a roller.

7. Measuring system according to Claim 4, characterised in that the adjusting wheel (16) is joined to the axis of rotation (7) of the sampling plate (4) and has at its periphery recesses (17) which are engaged by the adjusting bolts (18).

**Revendications**

1. Système numérique électrique de mesure de longueurs ou d'angles, comportant un dispositif pour corriger les erreurs, notamment les erreurs de graduation et/ou les erreurs de machine, un support (échelle) présentant une graduation de mesure (2) et un ensemble lecteur (3) explorant cette graduation de mesure (2), ladite graduation de mesure (2) et l'ensemble lecteur (3) étant prévus chacun sur l'un des deux objets (1, 6) mobiles l'un par rapport à l'autre, et l'ensemble lecteur (3) étant lié, soit directement, soit par l'intermédiaire d'un entraîneur (5), à l'un de ces objets (1, 6) dont la position relative mutuelle est mesurée, caractérisé en ce que la graduation de mesure (2) et une plaque de lecture (4) agencée dans l'ensemble lecteur (3) sont capables de pivoter l'un par rapport à l'autre, transversalement à la direction de mesure (X) autour d'un axe de rotation (7), de façon telle que les plans (12, 11) de la graduation de mesure et de la plaque de lecture forment, dans un plan parallèle à la direction de mesure (X), un angle φ correspondant à l'évolution de l'erreur dans la direction de mesure (X).

2. Système de mesure selon la revendication 1, caractérisé en ce que, pour régler l'angle φ, la plaque de lecture (4) est capable de pivoter autour de l'axe de rotation (7) qui est prévu parallèlement au plan (12) de la division de mesure (2), à une distance a de celui-ci, et est dirigé perpendiculairement à la direction de mesure (X).

3. Système de mesure selon la revendication 2, caractérisé en ce qu'à la graduation de mesure (2) est associé un profil (8) de correction d'erreur qu'un élément de transmission (9) explore pour faire pivoter la plaque de lecture (4).

4. Système de mesure selon la revendication 2, caractérisé en ce qu'à la graduation de mesure (2) sont associés des doigts positionneurs (18) qui agissent sur une roue positionneuse (16) pour faire pivoter la plaque de lecture (4).

5. Système de mesure selon la revendication 2, caractérisé en ce que l'axe de rotation (7) est disposé perpendiculairement à la direction de mesure (X), dans le plan de symétrie perpendiculaire à la plaque de lecture (4).

6. Système de mesure selon la revendication 3, caractérisé en ce que l'élément de transmission (9) est constitué par un galet.

7. Système de mesure selon la revendication 4, caractérisé en ce que la roue positionneuse (16) est liée à l'axe de rotation (7) de la plaque de lecture (4) et présente, sur son pourtour, des échancrures (17) dans lesquelles les doigts positionneurs (18) pénètrent.

FIG. 1a

FIG. 1b

FIG. 2a

FIG. 2b

# FIG. 3a

# FIG. 3b